## Europäisches Patentamt
## European Patent Office
## Office européen des brevets

(19)

(11) Veröffentlichungsnummer : **0 153 298**
**B1**

(12)

# EUROPÄISCHE PATENTSCHRIFT

(45) Veröffentlichungstag der Patentschrift :
**11.10.89**

(51) Int. Cl.⁴: **B 23 K 11/24**

(21) Anmeldenummer : **85890027.7**

(22) Anmeldetag : **06.02.85**

(54) Einrichtung zur Überwachung elektrischer Schweissvorgänge, insbesondere elektrischer Widerstands-Punktschweissungen.

(30) Priorität : **07.02.84 AT 385/84**

(43) Veröffentlichungstag der Anmeldung :
**28.08.85 Patentblatt 85/35**

(45) Bekanntmachung des Hinweises auf die Patenterteilung : **11.10.89 Patentblatt 89/41**

(84) Benannte Vertragsstaaten :
**AT BE CH DE FR GB IT LI LU NL SE**

(56) Entgegenhaltungen :
**DE—A— 3 115 840**
**DE—A— 3 202 790**
**GB—A— 2 117 928**
**US—A— 3 800 119**
**IEEE TRANSACTIONS ON INDUSTRIAL ELECTRONICS AND CONTROL INSTRUMENTATION, Band IECl25, Nr, 1, Februar 1978, Seiten 14-16, IEEE, New York, US; J.A. HEISEL et al.: "Microcomputer-controlled resistance welder"**

(73) Patentinhaber : **SKF STEYR Gesellschaft m.b.H.**
**Seitenstettner Strasse 15**
**A-4400 Steyr (AT)**

(72) Erfinder : **Swatek, Harald, Dipl.-Ing.**
**Bergstrasse 26**
**A-7535 St. Michael (AT)**

(74) Vertreter : **Hübscher, Gerhard, Dipl.-Ing. et al**
**Patentanwälte Dipl.-Ing. Gerhard Hübscher Dipl.-Ing. Helmut Hübscher Dipl.-Ing. Heiner Hübscher Spittelwiese 7**
**A-4020 Linz (AT)**

## Beschreibung

Die Erfindung betrifft eine Einrichtung zur Überwachung elektrischer Widerstandschweißvorgänge, insbesondere elektrischer Widerstands-Punktschweißungen, durch Erfassung der zeitlichen Änderung von Kenngrößen, nämlich Strom und/oder Spannung, mit Detektoren zur Erfassung von Momentanwerten der Kenngrößen und einem Mikroprozessor, der aus den über wenigstens einen A/D-Wandler umgewandelten Momentanwerten der Kenngrößen deren zeitliche Änderung erfaßt und in Abhängigkeit vom Übereinstimmungsgrad dieser Änderung mit einem Sollwert Steuersignale für eine Anzeige- bzw. Steuereinrichtung erzeugt.

Einrichtungen dieser Gattung sind aus der GB-A-2 117 928 und der DE-A-31 15 840 bekannt.

Es wurde festgestellt, daß die Güte von elektrischen Widerstandsschweißungen nicht nur durch unmittelbare Überprüfung der jeweiligen Schweißstelle während und nach dem Schweißvorgang festgestellt werden kann, wobei für eine zerstörungsfreie Prüfung vorwiegend Abtastungen der Schweißstelle mit Ultraschall und Temperaturmessungen während des Schweißvorganges mit Hilfe entsprechender Sensoren vorgenommen werden, sondern daß man auch durch Beobachtung der zeitlichen Änderung anderer Kenngrößen eindeutige Rückschlüsse auf die Güte der Schweißung und darüber ziehen kann, ob beim Punktschweißvorgang die erzeugte Schweißlinse die vorgesehene Größe erreicht hat. Wesentliche Kenngrößen, aus denen Rückschlüsse gezogen werden können, sind der Spannungs- Strom- und der Widerstandsverlauf. Beim Punktschweißen tritt am Beginn einer ordnungsgemäßen Schweißlinsenbildung ein auf einen vorhergehenden Maximalwert innerhalb einer bestimmten Zeitspanne folgender charakteristischer Spannungsabfall auf, wobei bei einer ordnungsgemäßen Schweißung die Spannung bis zum Ende des Schweißvorganges weiter absinkt. Der tatsächliche Spannungsverlauf ist in der Praxis von einer Vielzahl weiterer Faktoren abhängig. Beispiele für solche Faktoren sind das jeweils verschweißte Material, die Dicke, Oberflächenbeschaffenheit, allfällige Korrosion und allfällige Beschichtung des Materials und auch von der Schweißmaschine selbst bestimmte oder beeinflußte Faktoren, wie die Größe der jeweils verwendeten Schweißelektroden beim Punktschweißen, deren Verschleißzustand, der Anpreßdruck und wieder die tatsächliche Betriebsspannung bzw. der Betriebsstrom mit dem der Schweißvorgang durchgeführt wird. Die Maschinenkenngrößen sind mit Ausnahme des Verschleißzustandes der Schweißelektroden für eine bestimmte Maschine feststellbar. Die anderen Kenngrößen bleiben bei aufeinanderfolgenden Schweißvorgängen in vielen Fällen nur dann gleich oder ähnlich, wenn die aufeinanderfolgenden Schweißungen unter praktisch gleichen Bedingungen vorgenommen werden. Dabei kann es aber zu Änderungen im Strom- bzw. Spannungsverlauf kommen, wenn zwei Werkstücke durch mehrere Punktschweißungen miteinander verbunden werden, da dann über die schon vorhandenen Punktschweißstellen Nebenschlüsse auftreten.

Es sind analog arbeitende Überwachungseinrichtungen bekannt, die die zeitliche Änderung der Kenngrößen oder den Verlauf der jeweiligen Kenngrößen in Absolutwerten erfassen oder eine Integration der jeweiligen Kenngrößenwerte in vorgegebenen Zeitabschnitten vornehmen. Es wird mit solchen Geräten nur möglich, die Kenngrößen für einen bestimmten Schweißvorgang aufzunehmen und allenfalls bei folgenden, unter annähernd gleichen Bedingungen vorgenommenen Schweißvorgängen nachzuforschen oder nachzusehen, ob die Kenngrößen in bestimmten Toleranzen dem Wunschverlauf folgen oder nicht. Es kann nicht objektiv festgestellt werden, ob es sich bei dem einmal festgehaltenen Verlauf um den tatsächlich günstigsten Verlauf der Kenngrößen gehandelt hat. Dementsprechend sind auch nur einfache, analog arbeitende Überwachungseinrichtungen bekannt, die bei Serienschweißungen unter annähernd gleichen Bedingungen anzeigen, ob der jeweilige Schweißvorgang als « gut » oder « schlecht » gewertet wird.

Bekannte Einrichtungen der eingangs genannten Art arbeiten zwar mit einer Umwandlung der jeweils erfaßten Momentanwerte in Digitalwerte und mit einem Mikroprozessor der aus den ihm zur Verfügung gestellten Daten in seinem Arbeitsprogramm die Ermittlungen durchführt, doch sind diese bekannten Einrichtungen jeweils auf ganz bestimmte Maschinen abgestellt und ermöglichen in der Praxis zwar eine schnellere Feststellung, ob ein Schweißvorgang als gut oder schlecht zu bewerten ist, sind in ihrer Anwendung aber grundsätzlich auf einfache Schweißvorgänge und auf die Anwendung bei bestimmten Maschinen unter bestimmten Parametern beschränkt.

Eine bekannte Einrichtung der eingangs genannten Art besitzt als Vollweg-Gleichrichter ausgebildete Detektoren für Strom und Spannung bei einer Wechselstrom-Schweißmaschine. Der Mikroprozessor berechnet aus den anstehenden Mittelwerten den jeweiligen Widerstandswert. Ferner ist das Programm so gewählt, daß ein Schweißvorgang nur dann als « gut » gewertet werden kann, wenn nach dem Detektieren des höchsten Widerstandswertes innerhalb einer bestimmten Zeitspanne ein Absinken des Widerstandswertes auftritt. Ist dies der Fall, dann wird dieser Widerstandswert aus den anstehenden Strom-Spannungswerten ermittelt und der Mikroprozessor berechnet dann, ob das Absinken des Widerstandswertes einem bestimmten Prozentsatz bzw. Bruchteil des Maximalwertes entspricht. Liegt das Absinken innerhalb des bestimmten Toleranzbereiches, wird der Schweißvorgang endgültig als « gut » gewertet. Die Berechnung nach Bruchteilen bzw. Prozenten des Maximalwertes hat den Vorteil, daß eine Unabhängigkeit von den auftretenden Absolutwerten erzielt wird. Die erzielte Aussage ist aber ungenau. Strom- und Spannungswerte werden vom Primärkreis eines Schweißtransformators abgeleitet, so daß Maschinenverluste in die Erfassung eingehen. Da nur einfach ermittelt wird, ob der Widerstandswert in der gewählten Zeit in einen Toleranzbereich absinkt oder nicht, wird der tatsächliche Verlauf eines Widerstandswertes nicht erfaßt, wobei bei möglichen Nebenschlußströmen große Toleranzwerte gewählt werden müssen. Die Einrichtung wird auf eine Maschine, vielfach sogar entsprechend den durchzuführenden Schweißvorgängen (etwa Einzelschweißung oder Serie-Punktschweißungen am gleichen Werkstück) eingestellt.

Aus der GB-A-2 117 928 ist eine Überwachungseinrichtung mit einem Programmspeicher bekannt, wobei verschiedene Schweißverläufe entsprechend den Erfordernissen ausgewählt, aber für jeden Schweißverlauf an sich nur ein oder zwei Kenndaten, die Sollwerte darstellen, gespeichert werden, so daß praktisch eine lineare Änderung der Parameter vorgegeben, nicht aber der tatsächliche (kurvenförmige) Verlauf der Parameter simuliert wird. Spannungs- oder Widerstandsabweichungen während des einzelnen Schweißvorganges können auch nicht erfaßt und mit dem zeitlichen Ablauf des Schweißvorganges zugeordneten Solldaten verglichen werden.

Aus der DE-A-31 15 840 ist eine programmierbare Schweißmaschinensteuerung mit Erfassung des Spannungs- und Widerstandsverlaufes an den Elektroden bekannt, welcher Verlauf mit einer von einem Referenzkurvengenerator erzeugten Referenzkurve verglichen wird, wobei bei Abweichungen des Istverlaufes vom Sollverlauf über Steuereinrichtungen die Andrückkraft der Elektroden verändert wird. Es muß mit analogen Elementen gearbeitet werden, um größere Verzögerungen zwischen dem Auftreten eines bestimmten Zustandes und der daraus abgeleiteten Änderung der Andrückkraft zu vermeiden. Der Meßsensor für den Schweißvorgang liegt im Primärkreis.

Aufgabe der Erfindung ist die Schaffung einer Einrichtung der eingangs genannten Art, die eine exakte Erfassung der zeitlichen Änderung der Kenngrößen und auch eine genaue Festlegung von einem Sollverlauf eines Schweißvorganges zugeordneten Daten ermöglicht, dabei die Berücksichtigung verschiedener Randbedingungen, insbesondere der Materialart, der Grundkenngrößen der jeweiligen Schweißmaschine und sogar des Verschleißgrades der Schweißelektroden zuläßt, eine Verknüpfung bzw. Auswertung der erhaltenen Daten nach verschiedenen Programmen ermöglicht und die in einer Weiterbildung sogar als Bestandteil einer Steuereinrichtung einer Schweißmaschine eingesetzt werden kann.

Die gestellte Aufgabe wird bei einer Einrichtung der eingangs genannten Art dadurch gelöst, daß der Mikroprozessor mit einem Speicher verbunden ist, in dem eine Vielzahl von Einzeldaten speicherbar sind, die je einem momentanen Spannungs- oder Stromwert bzw. einen aus diesen beiden Werten gebildeten momentanen Widerstandswert bei einem Sollverlauf eines Schweißvorganges entsprechen, und daß der Mikroprozessor bei einem Schweißvorgang in einem vorgegebenen Arbeitstakt über den A/D-Wandler aus vom Mikroprozessor rückstellbaren Spitzenwertdetektoren für die Kenngrößen eine Vielzahl von Momentan-Istwerten abfragt, die Istdaten den gespeicherten, einem Sollverlauf des Schweißvorganges entsprechenden Daten zuordnet und in einer Vergleicherstufe mit ihnen vergleicht und aus dem Übereinstimmungsgrad abgeleitet die Steuersignale für die Anzeige- bzw. Steuereinrichtung erzeugt.

Bei der erfindungsgemäßen Einrichtung können in einer weiteren Ausbaustufe Wähleinrichtungen zur Einstellung der Überwachungseinrichtung auf verschiedene Schweißmaschinen bzw. verschiedene Verarbeitungsprogramme der erfaßten Daten vorgesehen sein.

Eine Grunderkenntnis der Erfindung besteht darin, daß die Erfassung von Mittelwerten oder die Vorgabe von nur einer oder zwei Kenngrößen für einen ganzen Schweißvorgang nicht hinreichend genau ist, um eine für alle Schweißvorgänge eindeutige Aussage darüber zu erbringen, ob die Schweißung tatsächlich gut oder schlecht erfolgt ist. Eine unmittelbare Regelung der Schweißmaschine aus über die Überwachungseinrichtung erfaßten Abweichungen von einem Sollverlauf wie nach der DE-A-31 15 840 setzt eine analoge, maschinenspezifische Erzeugung von Referenzkurven in einem eigenen Referenzgenerator voraus, so daß die Überwachungseinrichtung nicht für verschiedene Maschinen geeignet ist. Die erfindungsgemäße Ausführung ermöglicht es, für einen Schweißvorgang eine Vielzahl von Einzeldaten für den Sollverlauf (was in weiterer Folge auch als Datenprofil bezeichnet werden wird) vorzugeben und mit ebenfalls einer Vielzahl von bezüglich des Schweißvorganges zeitlich zugeordneten Istdaten zu vergleichen, wobei Vorgabe und Vergleich digital erfolgen können, so daß der Gesamtaufbau vereinfacht wird und eine Anpassungsmöglichkeit an verschiedenste Anwendungsfälle gegeben ist. Es sind auch verschiedene zusätzliche Anwendungen der Ergebnisse, die mit einer erfindungsgemäßen Einrichtung erhalten werden, möglich. Nach einer dieser Möglichkeiten können die Daten des Datenprofils ausgedruckt oder zur graphischen Darstellung des jeweiligen Kenngrößenverlaufes auf einem Bildschirm oder mittels eines Streifenschreibers verwendet werden. Dies ist bei der Neueinstellung einer Schweißmaschine auf einen bestimmten Schweißvorgang vorteilhaft. Man kann nachträglich die hergestellte Schweißung überprüfen und allenfalls Änderungen der Grundparameter vornehmen und dann die Schweißung so oft wiederholen, bis eine einwandfreie Schweißstelle erhalten wird, bei der gleichzeitig die Grundparameter festgehalten wurden. Der ermittelte Sollverlauf des Datenprofiles kann dann bei der jeweiligen Schweißmaschine oder auch bei Schweißmaschinen gleichen Typs zur Überwachung der Schweißvorgänge eingesetzt werden. Wenn die Erfassung der einen Halbwelle von Strom und Spannung über die Spitzenwertdetektoren nicht ausreicht, um bei verschiedenen Schweißaufgaben eindeutige bzw. vollständige Charakteristika zu erhalten, wird der zusätzliche Eingang zur Erfassung und Berücksichtigung eines weiteren Parameters des Schweißvorganges vorgesehen, deren Datenprofil ebenfalls erfaßt und in der Vergleichseinrichtung ausgewertet wird.

Bei der Überwachung eines Schweißvorganges im Serienbetrieb kann auch mit der erfindungsgemäßen Einrichtung über das Ausgangssignal des Mikroprozessors eine Anzeige « gut » oder « schlecht » gesteuert werden. Man kann aber auch einen Vergleich nach dem Korrelationsprinzip vornehmen und den Grad der Übereinstimmung des Ist-Verlaufes mit dem Sollverlauf ziffernmäßig ausdrücken. Diese Möglichkeit ist besonders für den Serienbetrieb interessant, da hier aus einer fortlaufend abnehmenden, immer aber noch als « gut » zu wertenden Korrelation darauf geschlossen werden kann, daß in absehbarer Zeit eine Störung auftreten bzw. eine Nachstellung an der Maschine notwendig werden wird.

Bei der Auswertung können in einer weiteren Ausbaustufe Parameter, die die Kenngrößen verändern, mit berücksichtigt werden. Solche Parameter sind verschieden starke Oberflächenkorrosionen, Nebenschlüsse durch vorhergehende Punktschweißungen am gleichen Werkstück usw. Auch bei der erfindungsgemäßen Einrichtung ist es möglich, nur die Änderung der Kenngrößen und nicht ihre absoluten Werte zu detektieren. Bei Serienschweißungen kann man an einem Probewerkstück mit mehreren Schweißstellen einen günstigen Verlauf der Kenngrößen für jede einzelne Schweißstelle ermitteln und speichern und dann beim Serienbetrieb der Schweißmaschine für die jeweilige Schweißstelle die zugeordneten Vergleichsdaten abrufen. Für in Serienfertigung stehende Schweißmaschinen kann man die Sollverläufe der zeitlichen Änderung der Kennwerte in Festwertspeichern festhalten. Dabei werden bei einer einfachen Ausführung Schalter vorgesehen, die in Abhängigkeit von der Einstellung der Maschine auf ein bestimmtes Werkstück bzw. eine bestimmte Materialart und -stärke das zugeordnete Sollwertprofil im Speicher auswählen.

Bei Wechselstromschweißungen kann man das Auslesen der Spitzenwertdetektoren über den Mikroprozessors von der Frequenz der Betriebsstromes ableiten. Reicht diese Frequenz für die Erfassung eines bestimmten kritischen Bereiches im Verlauf der Kenngrößen nicht aus, oder wird mit Gleichstrom gearbeitet, was beispielsweise bei sehr dünnen Blechen der Fall sein kann, dann kann der Takteingang des Mikroprozessors von einer bei Wechselstromschweißungen von der Frequenz des Betriebsstromes gesteuerten Triggerstufe auf einen Taktgeber umschaltbar sein.

Nach einer Weiterbildung ist der das dem Sollverlauf des Schweißvorganges entsprechende Datenprofil aufnehmende Speicher als über den Mikroprozessor programmierbarer Speicher ausgebildet, so daß es möglich ist, einen als besonders günstig erkannten Schweißverlauf auszuwählen und sein Datenprofil als Sollwertprofil für folgende gleiche Schweißvorgänge zu speichern.

Es wurde schon erwähnt, daß bei vielen Schweißvorgängen der bei Beginn der Schweißlinsenbildung auftretende Knick oder Abfall in der Spannungskennlinie ein besonderes Kriterium für die tatsächliche Bildung der Schweißlinse darstellt, wobei der absolute oder maximale Spannungswert, bei dem dieser Knick auftritt, durch andere Faktoren bedingt bei aufeinanderfolgenden Schweißungen verschieden sein kann. Um nun mit einfachen Mitteln feststellen zu können, ob der erwähnte Knick aufgetreten ist oder nicht, kann im Mikroprozessor zusätzlich zu dem Speicher für das Datenprofil ein Speicher für Maximalwerte vorgesehen sein, wobei die Vergleicherstufe des Mikroprozessors den jeweils anstehenden Momentanwert mit dem Inhalt des zugeordneten Maximalwertspeichers vergleicht und bei detektierten Änderungen der Kenngrößen ein Steuersignal erzeugt.

Nach einer Weiterbildung der Erfindung sind für Wechselstromschweißungen neben Spitzenwertdetektoren für die positiven Halbwellen zusätzliche Spitzenwertdetektoren für die negativen Halbwellen der Schweißspannung bzw. des Schweißstromes vorgesehen und mit den zusätzlichen Eingängen des Mikroprozessors verbunden. Aus charakteristischen Unterschieden der positiven und negativen Halbwelle bzw. der Maximalwerte dieser Wellen kann man beispielsweise ein Halbleiterverhalten des verschweißten Materials zu Beginn der Schweißung feststellen und danach die weiteren Schweißparameter wählen. Der Vergleich der positiven und negativen Halbwellen untereinander bzw. die Überprüfung wird unter Berücksichtigung der durch die Strom- bzw. Spannungsrichtungsänderungen auftretenden Ausgleichsvorgänge vorgenommen. Es wurde festgestellt, daß durch die erwähnte Maßnahme die Schweißung beschichteter Bleche vereinfacht wird. Plötzlich auftretende Unterschiede zwischen positiver und negativer Halbwelle können bei Serienschweißungen eine Anzeige für Materialverwechslungen sein. Man kann in vielen Fällen auch aus dem Verhältnis von positiver und negativer Halbwelle auf das Vorhandensein bestimmter Materialien schließen, diese Materialien also identifizieren.

Die Größe einer Schweißlinse bei der Punktschweißung hängt von der auftretenden Temperatur und diese wieder von aufgewendeten elektrischen Arbeit ($I^2 \times R \times t$) ab. Man kann diese Arbeit in grober Annäherung mit der nach Beginn der Schweißlinsenbildung zugeführten Strommenge und die letztere ebenfalls in grober Annäherung mit der Anzahl der nach dem Auftreten des Spannungsknickes noch zugeführten Anzahl von Wechselstromperioden definieren. Bei dieser Art der Auswertung startet man mit einem beim Spannungsknick ausgelösten Steuersignal eine Zähleinrichtung, die die Schweißstromperioden bis zur Beendigung der Schweißung zählt und deren Inhalt dann ein grobes Maß für die Größe der Schweißlinse ist, wobei angezeigt werden kann, ob die Schweißlinse als « gut » oder « schlecht » gewertet wird. Die beschriebene Art der Auswertung ist ungenau und nur für untereinander gleichartige Schweißungen auf der gleichen Maschine sinnvoll. Es wird nämlich weder der tatsächliche Widerstandsverlauf noch die Kurvenform des Schweißstromes berücksichtigt. Um hier Abhilfe zu schaffen, kann der Mikroprozessor für Wechselstromschweißungen einen zusätzlichen Eingang für den effektiven Schweißstrom und/oder der effektiven Schweißspannung entsprechende Daten aufweisen. Nach einer Variante ist dabei der zusätzliche Dateneingang mit einem an einen Schweißstromfühler angeschlossenen Effektivwertbildner verbunden, wogegen nach einer anderen Variante der zusätzliche Dateneingang bei Schweißmaschinen mit Phasenanschnittsteuerung des Schweißstromes an einem Detektor für den Phasenanschnittwinkel liegt. Im letzteren Fall wird der effektive Schweißstrom durch Berechnung im Mikroprozessor erfaßt. In beiden Fällen kann die für die Bildung der Schweißlinse aufgewendete elektrische Arbeit nach der obigen Formel genau ermittelt werden. Bei einem gespeicherten Sollverlauf des Schweißstromes oder im letzteren Fall bei einer Speicherung der elektrischen Schweißarbeit für einen bestimmten Schweißvorgang kann man sehr genau feststellen, ob eine Schweißung gut oder schlecht ist. Ferner kann man auch bei machen Maschinen vorhandene Vor- und Nachwärmzeiten, in denen eine Widerstandserwärmung des Materials mit verringertem Strom durchgeführt wird, berücksichtigen und überprüfen, ob auch hier Sollverläufe eingehalten bzw. die gewünschten aus der Stromarbeit definierten Wärmemengen zugeführt werden.

Beim Verschweißen dickerer Bleche durch mehrere Punktschweißstellen kann es bei auf die erste Schweißung folgenden Schweißungen zu beträchtlichen Nebenschlußströmen kommen. Bei dünneren Blechen werden solche Nebenschlußströme durch die entgegengesetzten Stromrichtungen des Nebenschlußstromes in den beiden aufeinanderliegenden dünnen Blechen und die dadurch bedingte Stromverdrängung zur Außenoberfläche des jeweiligen Bleches stark unterdrückt. Auch diese Tatsache läßt sich durch Überprüfung der Schweißvorgänge mit einer erfindungsgemäßen Einrichtung feststellen. Bei anderen Schweißvorgängen, beispielsweise beim Zuschweißen von Kettengliedern in Kettenschweißmaschinen, treten dagegen wieder sehr hohe Nebenschlußströme durch das Kettenglied selbst auf.

Zur Berücksichtigung solcher Nebenschlußströme kann der zusätzliche Eingang des Mikroprozessors mit einem Fühler für beim Schweißvorgang auftretende Nebenschlußströme verbunden sein. Bei einer Kettenschweißmaschine kann als Fühler für den Nebenschlußstrom ein neben dem Kettenglied, insbesondere in dessen Krümmungsbereich angebrachter Fühler für das von dem durch das Glied fließenden Nebenschlußstrom erzeugte magnetische Feld vorgesehen sein. Bei der beschriebenen Anordnung bleibt der Fühler weitgehend von dem durch den Schweißstrom selbst erzeugten Feld unbeeinflußt. Durch Differenzbildung von Gesamtstrom und Nebenschlußstrom erhält man bei den beschriebenen Maschinen eine eindeutige Aussage über den tatsächlichen Schweißstrom bzw. dessen Effektivwert.

Vorzugsweise werden zur Erfassung der Schweiß- bzw. Nebenschlußströme Hallsonden vorgesehen. Diese können von den die Ströme führenden Teilen galvanisch getrennt angebracht werden. Insbesondere kann man solche Sonden außen an Kabeln od. dgl. insbesondere im Sekundärstromkreis eines Schweißtransformators anbringen, so daß die Maschinenverluste nicht in die Messung eingehen. Die Sonden können auch leicht nachträglich an bestehenden Schweißmaschinen bzw. den von diesen wegführenden Leitungen angebracht werden. Wenn es auf hohe Genauigkeit ankommt, kann man auch Fühler für den induktiven Spannungsanteil vorsehen und diesen bei der Erfassung der Schweißspannung berücksichtigen.

Zusätzlich zu der schon beschriebenen Erfassung eines Datenprofiles beim Schweißvorgang und der Überwachung des Schweißvorganges durch Vergleich der Datenprofile eines Soll- und Ist-Verlaufes kann man nach einer weiteren Ausgestaltung der Erfindung auch den Schweißvorgang selbst beeinflussen. Zu diesem Zweck ist nach einer weiteren Ausgestaltung der Erfindung die erfindungsgemäße Einrichtung mit einer Steuereinrichtung für die zugeordnete Schweißmaschine verbunden oder in diese integriert, so daß wenigstens ein Teil der Ausgangssignale des Mikroprozessors der Steuereinrichtung als Steuersignal zuführbar ist. Nach einer Möglichkeit wird die zur Schweißlinsenbildung aufgewendete elektrische Arbeit durch Zählung der Periodenanzahl oder durch Bestimmung von Effektivstrom, Widerstand und Zeit festgelegt und die Maschine nach Ablauf dieser Zeit abgeschaltet. Auch Vor- und Nachwärmzeiten können über die erfindungsgemäße Einrichtung gesteuert werden. Es ist aber auch möglich, aufgrund festgestellter Änderungen gegenüber dem vorgegebenen Sollverlauf der Betriebsparameter die Spannungs- bzw. Stromregelung der Schweißmaschine selbst anzusteuern. Ein Teil der mit der erfindungsgemäßen Einrichtung erfaßten Daten kann auch einer zentralen Steuer- bzw. Überwachungseinheit in einem Betrieb zugeführt werden. Mit der erfindungsgemäßen Einrichtung lassen sich auch charakteristische Änderungen der Kenngrößen feststellen, die durch Verschleißerscheinungen (Abbrand) der Schweißelektroden bedingt sind.

In der Zeichnung ist der Erfindungsgegenstand beispielsweise dargestellt. Es zeigt

Fig. 1 eine Überwachungseinrichtung an einer Punktschweißmaschine im Blockschaltschema,

Fig. 2 eine Variante zu Fig. 1 und
Fig. 3 eine Ausführungsform für eine Kettenschweißmaschine.

Für eine Punktschweißmaschine 1 ist eine elektrische Versorgungseinrichtung mit einem Schweißtransformator 2 mit Phasenregelung vorgesehen. An der vom Schweißtransformator 2 zur Schweißmaschine 1 führenden Leitung 3 liegt ein Stromdetektor 4, beispielsweise ein Halbleiter-Hallsensor, der einfach auf ein die Versorgungsleitung 3 bildendes Kabel aufgesetzt werden kann ; ferner ist ein Spannungsabgriff 5 vorgesehen.

Man könnte auch einen normalen Stromwandler verwenden, müßte aber dann die dort auftretende Phasenverschiebung kompensieren oder berücksichtigen.

Bei der dargestellten Einrichtung sind somit ein Stromüberwachungszweig und ein Spannungsüberwachungszweig vorgesehen. Der Spannungsüberwachungszweig führt über einen Spannungsbegrenzer 6, der ein Durchschlagen von Überspannungen, wie sie beispielsweise beim Öffnen der Schweißelektroden 7 auftreten, auf das Gerät verhindert. Im Stromüberwachungszweig liegt ein Verstärker 8. In beiden Zweigen folgen dann Filter 9, 10, die die Aufgabe haben das anliegende Signal zu glätten und in eine leicht auswertbare Form zu bringen. Nach einer Möglichkeit liegt am Ausgang der Filter 9, 10 nur mehr die Grundwelle des Signales (Strom- bzw. Spannungsverlauf des Schweißstromes) an.

In den beiden Signalzweigen folgen dann Spitzenwertdetektoren 11, 12 bzw. 13, 14, für jeweils die positive und negative Halbwelle des Signales. Ein Mikroprozessor 15 erhält über eine Leitung 16 ein Taktsignal, das entweder über einen Komperator 17 von der Frequenz des Betriebsstromes bzw. der Betriebsspannung oder von einem eigenen Taktgeber 18 abgeleitet wird, was bei Gleichstromschweißungen notwendig ist und bei Wechselstromschweißungen zur Erhöhung der Tastfrequenz vorgesehen werden kann. Beim Ausführungsbeispiel ist ein Umschalter 19 vorhanden, mit dem zwischen Komperator 17 und Taktgeber 18 umgeschaltet werden kann.

An den Spitzenwertdetektoren 11 bis 14 tritt innerhalb jeder Halbwelle ein Maximalwert auf, der festgehalten und auf die Eingänge eines Analogumschalters 20 gelegt wird, der diese Werte nacheinander in einem bestimmten Schaltprogramm einem Analog-Digitalwandler 21 zuführt, von wo sie an einen Eingang des Mikroprozessors 15 gelangen. Der Mikroprozessor bestimmt dabei, wann und wie die Signale vom A/D-Wandler eingelesen werden. Ferner stellt der Mikroprozessor 15 über Leitungen 22, 23 nach jeder Abfrage die Spitzenwertdetektoren 11 bis 14 zurück, so daß sie für die Aufnahme des Spitzenwertes der nächsten zugeordneten Halbwelle bereit sind.

Man könnte auch jeden Spitzenwertdetektor über einen eigenen A/D-Wandler mit dem Mikroprozessor 15 verbinden und den Analogumschalter 20 weglassen. Die vorliegende Ausführung hat den Vorteil, daß mit einem einzigen relativ teuren A/D-Wandler das Auslangen gefunden wird.

An einem weiteren Eingang des Mikroprozessors liegt der Ausgang eines Periodenzählers 24, der die Periodenanzahl bei jedem Schweißvorgang zählt und durch die Beendigung des Schweißvorganges auf Null zurückgesetzt wird.

Eingabeschalter 25 ermöglichen die Eingabe von Betriebsparametern, wie Materialart, Materialdicke, Material beschichtet oder nicht usw. in den Mikroprozessor. Ferner ist eine Einstelleinrichtung 26 zur Bestimmung des Betriebsmodus des Mikroprozessors vorgesehen, mit der nach einer Möglichkeit die Betriebsarten « einstellen » und « schweißen » vorgewählt werden können. Der Mikroprozessor 15 besitzt ferner noch Anschlüsse für einen Datenspeicher 27 und einen Programmspeicher 28.

Bei Einstellung des Modus « einstellen » werden die Spitzenwerte der Kenngrößen in den einzelnen Halbperioden für Strom und Spannung getrennt als Datenprofile im Mikroprozessor erfaßt und dort gespeichert. Während oder nach dem Schweißvorgang können diese Daten auf einen Drucker 29 ausgelesen oder auf einer graphischen Anzeige 30 in Form von Kurven dargestellt werden. Nach einer weiteren, zusätzlich einstellbaren Betriebsart, ist im Mikroprozessor ein Maximalwertspeicher für Strom und Spannung vorhanden und der Mikroprozessor vergleicht die jeweils von den Detektoren 11 bis 14 abgefragten Werte mit dem gespeicherten Spitzenwert, so daß ein Spannungsabfall detektiert wird. Die Anzahl der von diesem Spannungsabfall an auftretenden Perioden des Schweißstromes wird gezählt. Entspricht diese Anzahl einem vorbestimmten Wert, leuchtet eine Anzeigelampe « gut » 31 auf, wird der Wert nicht erreicht leuchtet eine Anzeigelampe « schlecht » 32 auf. Aus dem charakteristischen Verlauf des Stromes bzw. der Schweißspannung können auch Hinweise für notwendige Größenänderungen abgeleitet und auf Anzeigelampen 33, 34 « Schweißstrom zu groß » bzw. « Schweißstrom zu klein » ersichtlich gemacht werden.

Wurde bei dem erwähnten Modus « einstellen » ein günstiger Verlauf des Kenngrößenprofiles ermittelt, dann kann dieser Verlauf als Sollverlauf in den Speicher 27 übertragen werden, wozu eine entsprechende Eingabeeinstellung vorgenommen wird. Man kann im Speicher 27 aber auch auf entsprechenden fremden Einrichtungen vorprogrammierte Speicherwerte als Sollverlauf für eine Schweißung festhalten. Bei einem nun folgenden Schweißvorgang kann über ein vom Programmspeicher 28 bestimmtes Programm festgelegt werden, daß die jeweils einlangenden Daten von den Spitzenwertdetektoren mit den im Speicher 27 gespeicherten Daten verglichen werden. Wird ein Mindestgrad an Übereinstimmung ab dem Beginn des Schweißspannungsabfalls festgestellt, kann die Schweißung als « gut » gewertet werden. Man kann hier auch Sicherheiten einbauen und beispielsweise festlegen, daß nur die seit dem letzten Spannungsanstieg auftretende Periodenanzahl für die Wertung « gut »

oder « schlecht » herangezogen wird, damit eine kurz begonnene und dann unterbrochene Punktschweißung an der gleichen Stelle für die Wertung nicht herangezogen wird. Bei starken Abweichungen des Ist-Verlaufes vom Sollverlauf kann über einen Schalter 35 eine Alarmanlage betätigt werden. Es ist aber auch möglich, nicht nur die erwähnten Daten des Datenprofiles, sondern auch weitere Daten im Datenspeicher 27 zu speichern und eine zur Steuereinrichtung der Schweißmaschine 1 führende Leitung 36 vorzusehen. Über diese Leitung kann die Maschinensteuerung beeinflußt bzw. sogar eine Regelung vorgenommen werden. Der Ausgang 37 des Mikroprozessors 15 kann über Schnittstelleneinrichtungen auch mit weiteren Anzeige- und Steuereinrichtungen bzw. mit einer Zentralrechner- bzw. Datenerfassungseinheit eines Betriebes verbunden werden.

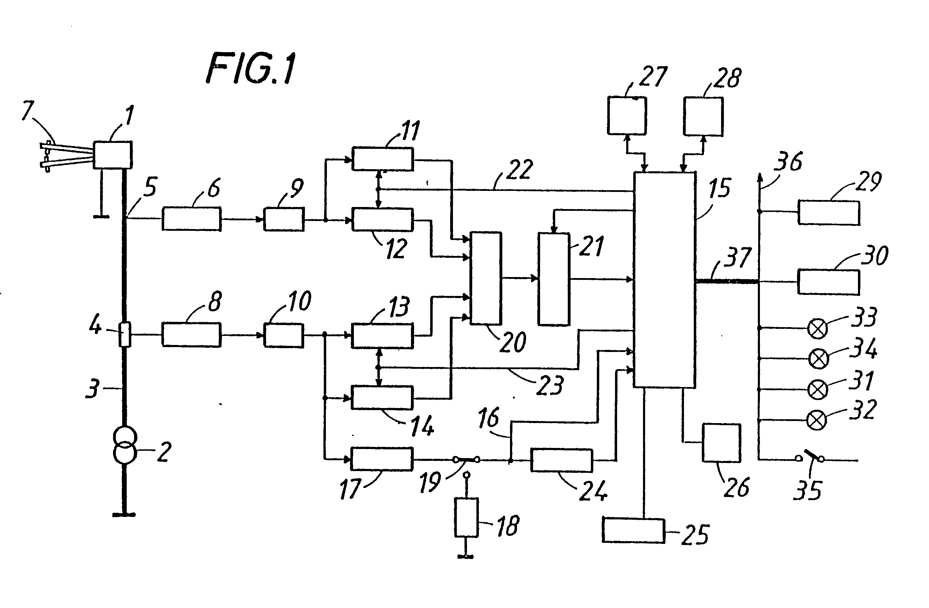

Bei der Ausführung nach Fig. 1 werden über den Mikroprozessor die Werte der positiven und negativen Halbwellen von Strom und Spannung über die Spitzenwertdetektoren 11 bis 14 erfaßt. Es ist dabei auch möglich, insbesondere auch unter Berücksichtigung der Ausgleichsvorgänge bei der Strom-- bzw. Spannungsrichtungsänderung Vergleiche zwischen den jeweils anstehenden positiven und negativen Halbwellen vorzunehmen, um so ein allfälliges Halbleiterverhalter der verschweißten Bleche anzuzeigen oder zu detektieren.

Im Zusammenhang mit Fig. 1 ist zu erwähnen, daß einige der für die Überwachung heranzuziehenden Parameter noch genauer oder zusätzlich erfaßt werden können. Insbesondere kann man bei einer Phasenanschnittsteuerung des Schweißtransformators den Phasenanschnittwinkel über einen eigenen Detektor erfassen und entsprechende Daten über den Analogumschalter 20 und den A/D-Wandler 21 dem Mikroprozessor 15 eingeben. Für eine genaue Erfassung oder für bestimmte Arbeitsprogramme der Einrichtung kann sich die Notwendigkeit ergeben, den Ohm'schen Spannungsabfall an der Schweißstelle zu detektieren. Hier besteht eine Möglichkeit darin, zusätzlich zu einem normalen Spannungsabgriff für die den Schweißelektroden zugeführte Spannung einen Fühler für den induktiven Anteil dieser Spannung vorzusehen. Der normale Spannungsabgriff erfaßt die Summe aus Ohm'scher und induktiver Spannung, der beispielsweise als an der Zuleitung angeordnete Induktionsspule ausgebildete Fühler den induktiven Spannungsanteil. Entsprechende Werte können direkt dem Mikroprozessor zugeführt werden oder man führt den Spannungsbegrenzer 6 bzw. eine diesem vorgeschaltete Stufe als Differenzbildner aus, dem die Spannungen vom Spannungsabgriff und vom Induktionsspannungsfühler zugeleitet werden und der daher an den Verstärker 9 ein dem Ohm'schen Spannungsanteil entsprechendes Signal weitergibt. Wie noch zu beschreiben sein wird, kann man auch die effektiven Spannungs- und Stromwerte und Nebenschlußströme erfassen und bei der Signalverarbeitung berücksichtigen.

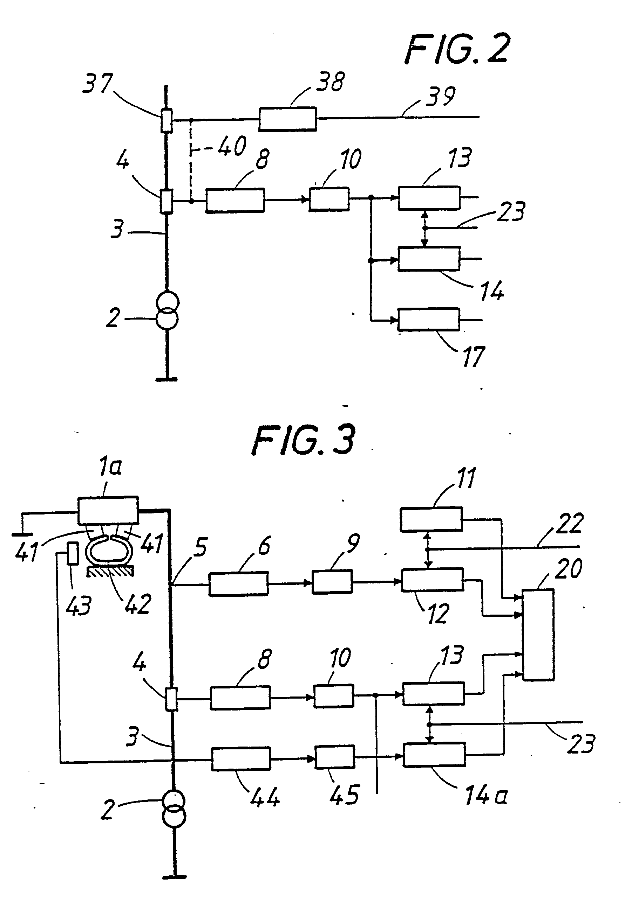

Fig. 2 zeigt eine Variante, bei der bei sonst prinzipiell mit Fig. 1 gleichbleibendem Aufbau zur Erfassung des Effektivwertes des Schweißstromes eine zweite Hallsonde 37 vorgesehen ist, die über einen Effektivwertbildner 38 an einer zu einem weiteren Eingang des Analogumschalters 20 führenden Leitung 39 liegt. Gegebenenfalls kann das dem Effektivwert des Stromes entsprechende Signal auf der Leitung 39 auch unmittelbar an einen Eingang des Mikroprozessors 15 gelegt werden.

Gegebenenfalls kann auch ein weiterer Mittelwertbildner zur Erfassung der effektiven Spannung vorgesehen werden. Der Mikroprozessor 15 wird so programmiert, daß er aus dem Effektivwert des Stromes, dem aus Strom und Spannung berechneten Widerstand und der durch die Periodenanzahl ausgedrückten Zeit (vorzugsweise wird hier der Taktgeber 18 eingesetzt) die Schweißarbeit berechnet. Aus dieser Berechnung kann wieder ein Signal für die Anzeige « gut » oder « schlecht » oder auch ein Steuersignal abgeleitet werden, das den Schweißvorgang unterbricht, sobald der Sollwert der Schweißarbeit erreicht ist. Wie durch die Leitung 40 strichliert angezeigt wurde, kann der Effektivwertbildner 38 gegebenenfalls auch an die Sonde 4 anschließen.

Nach Fig. 3 ist die erfindungsgemäße Überwachungseinrichtung an eine Kettenschweißmaschine 1a angeschlossen, die mit ihren Schweißbacken 41 die Schenkelenden eines vorgebogenen Kettengliedes 42 in einer Sollstellung gegeneinander drückt. Dabei fließt neben dem Schweißstrom über den Stoßspalt ein beträchtlicher Nebenschlußstrom durch das Kettenglied. Dieser Nebenschlußstrom wird mit einer neben dem einen Scheitel des Kettengliedes angebrachten Hallsonde 43 — die wegen der speziellen Anordnung im Scheitelbereich vom Feld des tatsächlichen Schweißstromes weitgehend unbeeinflußt bleibt — erfaßt und über einen Verstärker 44 und einen Filter 45 dem an Stelle des Spitzenwertdetektors 14 vorgesehenen Spitzenwertdetektor 14a zugeführt. Der Mikroprozessor 15 ist so programmiert, daß er die Differenz der an den Detektoren 13 und 14a anstehenden Momentanwerte bildet, also nur den tatsächlichen Schweißstrom berücksichtigt.

**Patentansprüche**

1. Einrichtung zur Überwachung elektrischer Widerstandsschweißvorgänge, insbesondere elektrischer Widerstands-Punktschweißungen, durch Erfassung der zeitlichen Änderung von Kenngrößen, nämlich Strom und/oder Spannung, mit Detektoren (11-14) zur Erfassung von Momentanwerten der Kenngrößen und einem Mikroprozessor (15), der aus den über wenigstens einen A/D-Wandler umgewandelten Momentanwerten der Kenngrößen deren zeitliche Änderung erfaßt und in Abhängigkeit vom Übereinstimmungsgrad dieser Änderung mit einem Sollwert Steuersignale für eine Anzeige- bzw. Steuereinrichtung (29-34) erzeugt, dadurch gekennzeichnet, daß der Mikroprozessor (15) mit einem Speicher (27) verbunden ist, in dem eine Vielzahl von Einzeldaten speicherbar sind, die je einem momentanen Spannungs- oder Stromwert bzw. einem aus diesen beiden Werten gebildeten Momentanwiderstandswert bei einem Sollverlauf eines Schweißvorganges entsprechen, und daß der Mikroprozessor (15) bei einem Schweißvorgang in einem vorgegebenen Arbeitstakt über den A/D-Wandler (21) aus vom Mikroprozessor (15) rückstellbaren Spitzenwertdetektoren (11-14) für die Kenngrößen eine Vielzahl von Momentan-Istwerten abfragt, die Istdaten den gespeicherten, einem Sollverlauf des Schweißvorganges entsprechenden Daten zuordnet und in einer Vergleichstufe mit ihnen vergleicht und aus dem Übereinstimmungsgrad abgeleitet die Steuersignale für die Anzeige- bzw. Steuereinrichtung (29-34) erzeugt.

2. Einrichtung nach Anspruch 1, dadurch gekennzeichnet, daß Wähleinrichtungen (25, 26, 35) zur Einstellung der Überwachungseinrichtung auf verschiedene Schweißmaschinen bzw. verschiedene Verarbeitungsprogramme der erfaßten Daten vorgesehen sind.

3. Einrichtung nach Anspruch 2, dadurch gekennzeichnet, daß der Takteingang des Mikroprozessors von einer bei Wechselstromschweißungen von der Frequenz des Betriebsstromes gesteuerten Triggerstufe (17) auf einen Taktgeber (18) umschaltbar ist.

4. Einrichtung nach den Ansprüchen 1 bis 3, dadurch gekennzeichnet, daß der das dem Sollverlauf des Schweißvorganges entsprechende Datenprofil aufnehmende Speicher (27) als über den Mikroprozessor (15) programmierbarer Speicher ausgebildet ist.

5. Einrichtung nach einem der Ansprüche 1 bis 4, dadurch gekennzeichnet, daß im Mikroprozessor (15) zusätzlich zu dem Speicher (27) für das Datenprofil ein Speicher für Maximalwerte vorgesehen ist und die Vergleicherstufe des Mikroprozessors den jeweiligen Momentanwert mit dem Inhalt des zugeordneten Maximalwertspeichers vergleicht und bei detektierten Änderungen der Kenngrößen ein Steuersignal erzeugt.

6. Einrichtung nach einem der Ansprüche 1 bis 5, dadurch gekennzeichnet, daß für Wechselstromschweißungen neben Spitzenwertdetektoren (11, 13) für die positiven Halbwellen zusätzliche Spitzenwertdetektoren (12, 14) für die negativen Halbwellen der Schweißspannung bzw. des Schweißstromes vorgesehen und mit den zusätzlichen Eingängen des Mikroprozessors (15) verbunden sind.

7. Einrichtung nach einem der Ansprüche 1 bis 6, dadurch gekennzeichnet, daß der Mikroprozessor (15) für Wechselstromschweißungen einen zusätzlichen Eingang für dem effektiven Schweißstrom bzw. der effektiven Schweißspannung entsprechende Daten aufweist.

8. Einrichtung nach Anspruch 7, dadurch gekennzeichnet, daß der zusätzliche Dateneingang mit einem an einen Schweißstrom- bzw. -spannungs fühler (37) angeschlossenen Effektivwertbildner (38) verbunden ist.

9. Einrichtung nach Anspruch 7, dadurch gekennzeichnet, daß der zusätzliche Dateneingang bei Schweißmaschinen mit Phasenanschnittsteuerung des Schweißstromes an einem Detektor für den Phasenanschnittwinkel liegt.

10. Einrichtung nach einem der Ansprüche 1 bis 9, dadurch gekennzeichnet, daß der zusätzliche Eingang des Mikroprozessors (15) mit einem Fühler (43) für beim Schweißvorgang auftretende Nebenschlußströme verbunden ist.

11. Einrichtung nach Anspruch 10, dadurch gekennzeichnet, daß bei einer Kettenschweißmaschine (1a) als Fühler für den Nebenschlußstrom ein neben dem Kettenglied (42), insbesondere in dessen Krümmungsbereich angebrachter Fühler (43) für das von dem durch das Glied fließenden Nebenschlußstrom erzeugte Feld vorgesehen ist.

12. Einrichtung nach einem der Ansprüche 1 bis 11, dadurch gekennzeichnet, daß zur Erfassung der Schweiß- bzw. Nebenschlußströme Hallsonden (4, 37, 43) vorgesehen sind.

13. Einrichtung nach einem der Ansprüche 1 bis 12, dadurch gekennzeichnet, daß zur Erfassung der Schweißspannung zusätzlich zu einem Spannungsabgriff ein Fühler für den induktiven Spannungsanteil der an den Schweißelektroden (7) anliegenden Spannung vorgesehen ist.

14. Einrichtung nach Anspruch 13, dadurch gekennzeichnet daß, der Fühler und der Spannungsabgriff (5) über einen Differenzbildner (6) an den Eingang der Einrichtung angeschlossen sind.

15. Einrichtung nach einem der Ansprüche 1 bis 14, dadurch gekennzeichnet, daß sie mit einer Steuereinrichtung für die zugeordnete Schweißmaschine verbunden ist, so daß wenigstens ein Teil der Ausgangssignale des Mikroprozessors (15) der Steuereinrichtung als Steuersignal zuführbar ist.

## Claims

1. An apparatus for monitoring electric resistance welding operations, particularly electric resistance spot welding operations, by a detection of the changes of parameters, namely, current and/or voltage, in dependence on time, comprising detectors (11 to 14) for detecting the instantaneous values of the parameters and a microprocessor (15) which from the instantaneous values of the parameters, which instantaneous values have been converted by at least one A/D converter, derives the changes of said parameters in dependence on time and in dependence on the degree of agreement of said change with a desired value generates control signals for indicating and/or control means (29-34), characterized in that the microprocessor (15) is connected to a memory (27), which is adapted to store a multiplicity of individual data, each of which corresponds to an instantaneous voltage or current value and/or to an instantaneous resistance value derived from said two values during a desired progress of a welding operation, and during a welding operation the microprocessor (15) samples at a predetermined cycle frequency a multiplicity of instantaneous actual values via the A/D converter (21) from peak value-detectors (11 to 14) for the parameters, which detectors are resettable by the microprocessor, the microprocessor associates the actual value data with the stored data which corresponds to a desired progress of the welding operation and compares said actual and stored data in a comparator stage and in dependence on the degree of agreement generates the control signals for the indicating and/or control means (29 to 34).

2. Apparatus according to claim 1, characterized in that selecting means (25, 26, 35) are provided for setting the monitoring apparatus for use with different welding machines and/or for different programmes for processing the data which have been detected.

3. An apparatus according to claim 2, characterized in that the clock input of the microprocessor is adapted to be changed over from a trigger stage (17), which is controlled by the frequency of the operating current during a. c. welding operations, to a clock (18).

4. An apparatus according to claims 1 to 3, characterized in that the memory (27) which stores the data profile corresponding to the desired progress of the welding operation consists of a memory which is programmable by the microprocessor (15).

5. An apparatus according to any of claims 1 to 4, characterized in that in addition to the memory (27) for the data profile the microprocessor (15) contains a memory for maximum values and the comparator stage of the microprocessor compares the current instantaneous value with the content of the associated maximum value memory and generates a control signal when changes of the parameters have been detected.

6. An apparatus according to any of claims 1 to 5, characterized in that for use in a. c. welding operations additional peak value detectors (12, 14) for the negative half-waves of the welding voltage and/or the welding current are provided in addition to peak value detectors (11, 13) for the positive half-waves and are connected to the additional inputs of the microprocessor (15).

7. An apparatus according to any of claims 1 to 6, characterized in that for a. c. welding operations the microprocessor (15) has an additional input for data corresponding to the r. m. s. welding current and/or the r. m. s. welding voltage.

8. An apparatus according to claim 7, characterized in that the additional data input is connected to an r. m. s. value generator (38), which is connected to a welding current and/or welding voltage sensor (37).

9. An apparatus according to claim 7, characterized in that for use with welding machines for phase angle control the additional data input is connected to a detector for the phase angle.

10. An apparatus according to any of claims 1 to 9, characterized in that the additional input of the microprocessor (15) is provided with a sensor (43) for shunt currents flowing during the welding operation.

11. An apparatus according to claim 10, characterized in that for use with a chain welding the shunt current sensor is constituted by a sensor (43) which is mounted beside the chain link and particularly adjacent to its bend and which serves to detect the magnetic field which is produced by the shunt current that flows through the link.

12. An apparatus according to any of claims 1 to 11, characterized in that Hall probes (4, 37, 43) are provided for detecting the welding and shunt currents, respectively.

13. An apparatus according to any of claims 1 to 12, characterized in that a sensor for the inductive voltage component of the voltage applied to the welding electrodes (7) is provided in addition to a voltage tap.

14. An apparatus according to claim 13, characterized in that the sensor and the voltage tap (5) are connected to the input of the apparatus via a difference signal generator (6).

15. An apparatus according to any of claims 1 to 14, characterized in that it is connected to means for controlling the associated welding machine so that at least part of the output signals of the microprocessor (15) is adapted to be delivered as a control signal to the control signal.

**Revendications**

1. Dispositif pour le contrôle d'opérations de soudure électrique par résistance, en particulier de soudure électrique par résistance par points, au moyen de la détection de la variation dans le temps de grandeurs caractéristiques, notamment l'intensité et/ou la tension, avec des détecteurs (11 à 14) pour la détection des valeurs instantanées des grandeurs caractéristiques et un microprocesseur (15) qui, à partir des valeurs instantanées des grandeurs caractéristiques transformées au moyen d'au moins un convertisseur analogique-numérique, détecte leur variation dans le temps et produit, en fonction du degré de concordance de cette variation par rapport à une valeur de consigne, des signaux de commande pour un dispositif d'affichage ou de commande (29-34), caractérisé en ce que le microprocesseur (15) est relié à une mémoire (27) dans laquelle une pluralité de données individuelles peuvent être mémorisées, qui correspondent chacune à une valeur instantanée de la tension ou de l'intensité ou à une valeur instantanée de la résistance obtenue à partir de ces deux valeurs, pour une allure prescrite d'une opération de soudage, et en ce que le microprocesseur (15) demande lors d'une opération de soudure à un rythme de travail prédéterminé, par l'intermédiaire du convertisseur analogique-numérique (21), à des détecteurs des valeurs de crête (11-14) des grandeurs caractéristiques, pouvant être remis à zéro par le microprocesseur (15), une pluralité de valeurs réelles instantanées, met en correspondance les données réelles avec les données de consigne mémorisées à une allure prescrite de l'opération de soudage et les compare à celles-ci dans un étage comparateur, et à partir du degré de concordance produit les signaux de commande pour le dispositif d'affichage ou de commande (29-34).

2. Dispositif selon la revendication 1, caractérisé en ce que des dispositifs de sélection (25, 26, 35) sont prévus en vue du réglage du dispositif de contrôle pour différentes machines de soudage ou différents programmes de traitement des données saisies.

3. Dispositif selon la revendication 2, caractérisé en ce que l'entrée de cadencement du microprocesseur peut être commutée pour le soudage en courant alternatif d'un étage de cadencement (17) commandé par la fréquence du courant de service à un circuit de cadencement (18).

4. Dispositif selon la revendication 1 à 3, caractérisé en ce que la mémoire (27) recevant le profil de données correspondant à l'allure prescrite du processus de soudage est constituée par une mémoire programmable par l'intermédiaire du microprocesseur (15).

5. Dispositif selon l'une des revendications 1 à 4, caractérisé en ce qu'il est prévu dans le microprocesseur (15), en plus de la mémoire (27) pour le profil de données, une mémoire pour des valeurs maximales, et en ce que l'étage comparateur du microprocesseur compare chaque valeur instantanée au contenu de la mémoire correspondante des valeurs maximales et émet un signal de commande lors des variations détectées des grandeurs caractéristiques.

6. Dispositif selon l'une des revendications 1 à 5, caractérisé en ce que, pour le soudage en courant alternatif, en plus des détecteurs de valeurs de crête (11, 13) des demi-alternances positives, sont prévus des détecteurs supplémentaires des valeurs de crête (12, 14) des demi-alternances négatives de la tension de soudage ou du courant de soudage, qui sont reliés à des entrées supplémentaires du microprocesseur (15).

7. Dispositif selon l'une des revendications 1 à 6, caractérisé en ce que le microprocesseur (15) a pour le soudage en courant alternatif, une entrée supplémentaire pour des données correspondant à l'intensité efficace de la soudure ou la tension efficace de la soudure.

8. Dispositif selon la revendication 7, caractérisé en ce que l'entrée supplémentaire de données est reliée à un calculateur de valeurs efficaces (38) relié à un détecteur de l'intensité de la soudure ou de la tension de la soudure (37).

9. Dispositif selon la revendication 7, caractérisé en ce que l'entrée supplémentaire de données est reliée, pour les machines à souder à commande du déphasage du courant de soudure, à un détecteur de l'angle de déphasage.

10. Dispositif selon l'une des revendications 1 à 9, caractérisé en ce que l'entrée supplémentaire du microprocesseur (15) est reliée à un détecteur (43) des courants de dérivation se produisant pendant l'opération de soudure.

11. Dispositif selon la revendication 10, caractérisé en ce que, dans le cas d'une machine à souder les chaînes (1a) il est prévu comme détecteur du courant de dérivation un détecteur (43) placé à côté du maillon (42), en particulier à côté de sa zone de courbure, pour le champ engendré par le courant de dérivation circulant dans le maillon.

12. Dispositif selon l'une des revendications 1 à 11, caractérisé en ce que des sondes de Hall (4, 37, 43) sont prévues pour la détection des courants de soudure ou des courants de dérivation.

13. Dispositif selon l'une des revendications 1 à 12, caractérisé en ce que, pour détecter la tension de soudage, il est prévu en plus d'une prise de tension, un détecteur de la composante de tension inductive de la tension fournie aux électrodes de soudage (7).

14. Dispositif selon la revendication 13, caractérisé en ce que le détecteur et la prise de tension (5) sont reliés, par l'intermédiaire d'un soustracteur (6), à l'entrée du dispositif.

15. Dispositif selon l'une des revendications 1 à 14, caractérisé en ce qu'il est relié à un dispositif de commande de la machine à souder correspondante, de telle sorte qu'au moins une partie des signaux de sortie du microprocesseur (15) peut être transmise au dispositif de commande en tant que signaux de commande.

FIG.1

EP 0 153 298 B1

# FIG.2

# FIG.3